# EUROPEAN PATENT APPLICATION

(11) **EP 4 458 312 A1**
(43) Date of publication of application: **06.11.2024**
(21) Application number: 23201593.3
(22) Date of filing: 04.10.2023
(51) Int. Cl.: A61C 3/14

(54) **DENTAL INSTRUMENT**

(30) Priority: 01.05.2023 US 202318141580
(71) Applicant: Sajid, Haseeb, West New York, NJ 07093 (US); Malik, Hassan, Sialkot (PK)
(72) Inventor: Sajid, Haseeb, West New York, NJ 07093 (US); Malik, Hassan, Sialkot (PK)
(74) Representative: Cechvalova, Dagmar

(57) **Abstract**

A dental instrument that includes a tool section, and a handle with a grip section, the grip section having a plurality of helical sections, each helical section being spaced from another helical section by an adjacent helical depression. The helical sections may be textured with adjacent ridges, each ridge having a curved ridgeline. The helical depressions may be defined by concave sections.

## Description

### FIELD OF INVENTION

The present invention relates to dental instruments.

### BACKGROUND OF THE INVENTION

In dentistry, many different manual instruments are used.

A typical manual dental instrument includes a handle attached to a tool section, which is used to perform the dental procedure.

Most dental procedure require the dentist to push the tool section against the patient's teeth (for example, when performing a scraping procedure) or pull the tool away from the patient's teeth (for example, when cleaning between the patient's teeth). Since the pushing or the pulling of the tool section is effected by pushing the handle toward the patient's teeth or pulling the handle away from the patient's teeth, a good grip on the handle is desirable.

The handle of a typical dental instrument may have a grip section that is manually gripped. The grip section of a typical dental instrument may be smooth, may be textured, or may have raised features (e.g. conical rings). With any one of the known configurations, the dentist must hold the handle between his/her fingers and press against the grip section of the handle firmly while performing a dental procedure, which can cause fatigue for the dentist.

### SUMMARY OF THE INVENTION

It is an object of the present invention to provide a dental instrument with an ergonomic handle with a grip section that improves on the known handles for dental instruments.

A dental instrument according to the present invention includes a tool section, and a handle with a grip section, the grip section having a plurality of helical sections, each helical section being spaced from another helical section by an adjacent helical depression.

The helical sections may be textured. For example, a plurality of adjacent ridges may be defined in each helical section.

Each ridge may extend from one helical depression to another helical depression.

One end of each ridge may be closer to the tool section than the other end of the ridge.

The plurality of adjacent ridges may cover more than 50% of each helical section or may cover more than more than 75% of each helical section.

The plurality of helical sections and the plurality of helical depressions may have a common longitudinal axis, which may be the longitudinal axis of the handle.

The grip section may include four helical sections and four helical depressions.

Each ridge may have a ridgeline that follows an arcuate path.

Each helical depression may be defined by a concave surface.

An instrument according to the first embodiment may have a tool section at one end of the handle, and an enlarged, bulbous section at another end of the handle.

An instrument according to the second embodiment may have the tool section at one end of the handle, and another tool section at another end of the handle.

An instrument according to the second embodiment may have another grip section spaced from the grip section and closer to the another tool section, the another grip section having a plurality of helical sections, each being spaced from another helical section by an adjacent helical depression.

In an instrument according to the second embodiment, the grip section and the another grip section are spaced by a spacer section. Preferably, the spacer section is narrower than the grip sections.

A grip for a dental tool according to the present invention includes a plurality of helical sections, each helical section being spaced from another helical section by an adjacent helical depression. Each helical section may be textured. For example, a plurality of adjacent ridges may be defined in each helical section. Each ridge may have a ridgeline that follows an arcuate path rendering the helical section convex. Furthermore, each helical depression may be defined with concave surface.

Other features and advantages of the present invention will become apparent from the following description of the invention which refers to the accompanying drawings.

### BRIEF DESCRIPTION OF THE DRAWINGS

Fig. 1A shows a side view of a dental instrument according to the first embodiment of the present invention.
Fig. 1B shows a cross-sectional view of the dental instrument of Fig. 1A taken along A-A and viewed in the direction of the arrows.
Fig. 1C is an enlarged view of section C in Fig. 1A and section C in Fig. 2A showing the ridges in the helical sections of the grip section of the handles of the first embodiment and the second embodiment.
Fig. 1D shows a cross-sectional view of the dental instrument of Fig. 1A and Fig. 2A taken along B-B and viewed in the direction of the arrows.
Fig. 2A shows a side view of a dental instrument according to the second embodiment of the present invention.
Fig. 2B shows a cross-sectional view of the dental instrument of Fig. 2A taken along A-A and viewed in the direction of the arrows.

### DETAILED DESCRIPTION OF EMBODIMENTS OF THE INVENTION

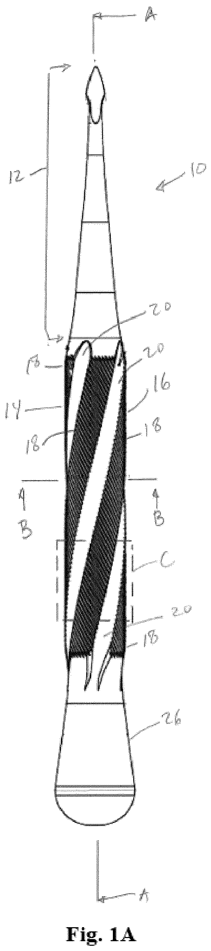

Referring to Fig. 1A, a dental instrument 10 according to the first embodiment of the present invention includes a tool section 12, and a handle 14 with a grip section 16.

The grip section 16 includes a plurality of helical sections 18.

Each helical section 18 is spaced from another helical section 18 by an adjacent helical depression (groove) 20.

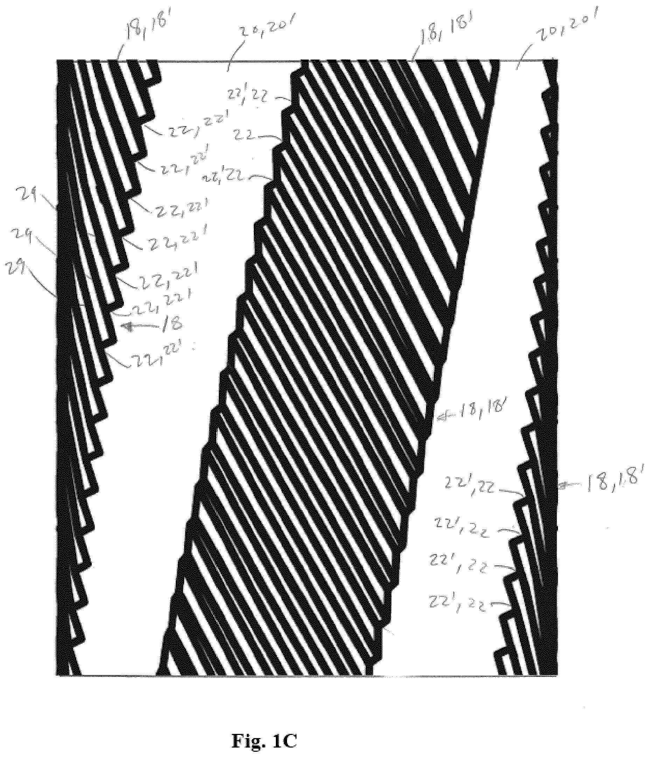

Each helical section 18 is preferably textured. Referring to Fig. 1C, for example, each helical section 18 may have a plurality of adjacent ridges 22 arranged to cover preferably more than 50% of the helical section, and more preferably more than 75% of the helical section.

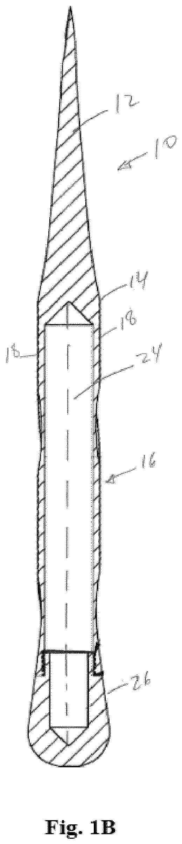

Referring to Fig. 1B, the plurality of helical sections 18 and the plurality of helical depressions 20 are arranged around a common longitudinal axis 24, which may be the central longitudinal axis of the handle 14.

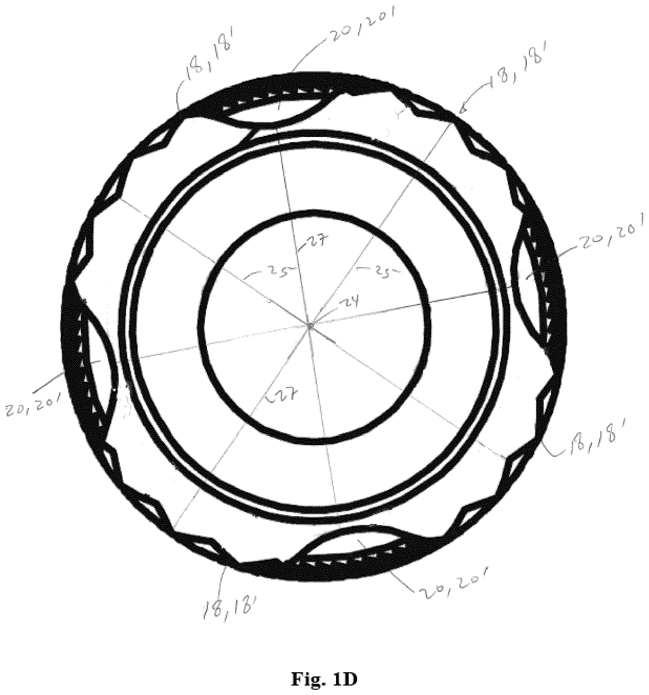

Referring to Fig. 1D, preferably, the grip section 16 includes four helical sections 18 and four helical depressions 20. The helical sections 18 are spaced with equal angular spacing such that at each cross-section taken transverse to the longitudinal axis 24 a mid-line 25 would pass through a midpoint of oppositely disposed helical sections 18. Similarly, helical depressions 20 are spaced with equal angular spacing such that at each cross-section taken transverse to the longitudinal axis 24, a mid-line 27 would pass through a midpoint of oppositely disposed depressions 20.

Referring to Fig. 1A, preferably, each ridge 22 extends from one helical depression 20 to another helical depression 20. Each ridge 22 may follow a path that starts at one end of the ridge 20 and ends at another end of the ridge 20, the one end being closer to the tool section than the other end.

Referring now to Fig. 1C, preferably, each ridge 22 is convex and with a ridgeline 29 that follows an arcuate path.

Referring to Fig. 1C, preferably, each helical depression 20 is defined by a concave, smooth (i.e. un-textured) surface.

In the first embodiment the tool section 12 may be an instrument to extract teeth including but not limited to periotomes or elevators, and extends from the distal end of the handle 14.

In the first embodiment, a bulbous end piece 26 may be coupled to the proximal end of the handle 14. For example, the end piece 26 may be screwed to the proximal end of the handle 14. The end piece 26 may be tear-shaped with a semispherical free end portion and frusto-conical portion, which is coupled to the proximal end of the handle 14.

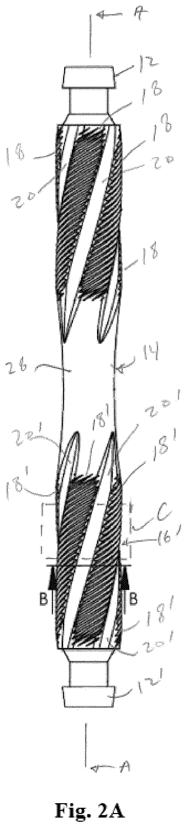

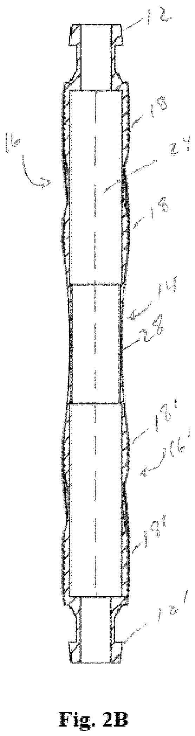

Referring to Fig. 2A, a dental instrument according to the second embodiment includes tool section 12', and another grip section 16' with helical sections 18' and helical depressions 20', each helical section 18' being adjacent two helical depressions 18'.

The another grip section 16' may have the same number of helical section 18' (for example, four) as the helical sections 18 of the grip section 16 or a different number.

The another grip section 16' may have the same number of helical depressions 20' (for example, four) as the helical depressions 20 of the grip section 16, or a different number.

Referring to Fig. 1D, the helical sections 18' may be spaced with equal angular spacing such that at each cross-section taken transverse to the longitudinal axis 24 a mid-line 25 would pass through a midpoint of oppositely disposed helical sections 18'.

Similarly, helical depressions 20' are spaced with equal angular spacing such that at each cross-section taken transverse to the longitudinal axis 24, a mid-line 27 would pass through a midpoint of oppositely disposed helical depressions 20'.

The helical sections 18' and the helical depressions 20' may be arranged around the common longitudinal axis 24. Each helical section 18' may also be textured. For example, referring to Fig. 1C, each helical section 18' may have adjacent ridges 22' covering at least 50% or more preferably 75% of the helical section 18'. Each ridge 22' may have ridgeline 29 that follows an arcuate path.

Furthermore, each ridge 22' may be oriented so that one end thereof, located at a helical depression 20' adjacent the helical section 18', is closer to the another tool section 12' than the opposite end thereof located at another helical depression 20' adjacent the helical section 20'. The helical depressions 20' may also be defined by a concave surface.

In the second embodiment, the grip section 16 and the anther grip section 16' are spaced from one another by spacer section 28. The spacer section 28 may be less wide (narrower) than the grip sections 16,16'.

In the second embodiment, the tool section 12, and the another tool section 12', may be configured to receive and couple to the same dental tool or different dental tool selected from elevators, periotomes, dental scalers, and other double sided dental tools.

A grip section 16 or a grip section 16' improves the ability of the dentist to perform the pushing and the pulling of the dental instrument's handle. Specifically, each helical depression receives a portion of a finger therein, while the remaining part of the finger make contact with adjacent helical sections. The part of the finger received in helical depression acts as a soft anchor that presses against the edges of the adjacent helical sections during the pushing or the pulling movements. Because the helical depressions are oriented at an angle relative to the longitudinal axis of the handle, the gripping fingers are less likely to slip during the pushing and the pulling of the handle. Accordingly, less pressure may be needed to maintain a good grip on the grip section of the instrument. In addition, the parts of the fingers that are not received in the helical depression can press against the textured surfaces of the adjacent helical sections for additional grip support.

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

## Claims

1. A dental instrument comprising:
a tool section; and
a handle with a grip section, the grip section comprising a plurality of helical sections, each helical section being spaced from another helical section by an adjacent helical depression.

2. The dental instrument of claim 1, wherein the helical sections are textured.

3. The dental instrument of claim 1, further comprising a plurality of adjacent ridges defined in each helical section.

4. The dental instrument of claim 3, wherein in each helical section the plurality of adjacent ridges cover more than 50% of the helical section.

5. The dental instrument of claim 3, wherein in each helical section the plurality of adjacent ridges cover more than 75% of the helical section.

6. The dental instrument of claim 1, wherein the plurality of helical sections and the plurality of helical depression have a common longitudinal axis.

7. The dental instrument of claim 1, wherein there are four helical sections and four helical depressions.

8. The dental instrument of claim 1, further comprising a plurality of adjacent ridges defined in each helical section, each ridge extending from one helical depression to another helical depression.

9. The dental instrument of claim 8, wherein each ridge is oriented so that one end thereof at a helical depression is closer to the tool section than another end thereof at 30 another helical depression.

10. The dental instrument of claim 1, wherein each ridge has a ridgeline that follows and arcuate path.

11. The dental instrument of claim 1, wherein each helical depression is concave.

12. The dental instrument of claim 1, wherein the tool section is at one end of the handle, and further comprising another tool section at another end of the handle.

13. The dental instrument of claim 12, further comprising another grip section spaced from the grip section and closer to the another tool section, the another grip section comprising a plurality of helical sections, each helical section being spaced from another helical section by an adjacent helical depression.

14. The dental instrument of claim 13, wherein the grip section and the another grip section being spaced by a spacer section.

15. The dental instrument of claim 14, wherein the spacer section is less wide than the grip sections.

16. The dental instrument of claim 1, wherein the tool section is at one end of the handle, and further comprising an enlarged section at another end of the handle.

17. A grip for dental tool, comprising: a plurality of helical sections, each helical section being spaced from another helical section by an adjacent helical depression.

18. The dental instrument of claim 17, further comprising a plurality of adjacent ridges defined in each helical section.

19. The dental instrument of claim 17, wherein each helical section is convex.

20. The dental instrument of claim 17, wherein each helical depression is concave.
